# EUROPÄISCHE PATENTSCHRIFT

(11) **EP 1 461 298 B1**
(45) Veröffentlichungstag und Bekanntmachung des Hinweises auf die Patenterteilung: **15.02.2006**
(21) Anmeldenummer: 02805763.6
(22) Anmeldetag: 19.12.2002
(51) Int. Cl.: C04B 35/52, C01B 31/04, F27B 9/06, F27B 14/06

(54) **VERFAHREN ZUR KONTINUIERLICHEN GRAPHITIERUNG**
METHOD FOR CONTINUOUS GRAPHITIZATION
PROCEDE DE GRAPHITISATION EN CONTINU

(30) Priorität: 28.12.2001 DE 10164012
(43) Veröffentlichungstag der Anmeldung: 29.09.2004
(73) Patentinhaber: SGL CARBON AG, 65203 Wiesbaden (DE)
(72) Erfinder: DAIMER, Johann, 64546 Mörfelden-Walldorf (DE); HILTMANN, Frank, 65830 Kriftel (DE); MITTAG, Jörg, 65187 Wiesbaden (DE)
(86) Internationale Anmeldenummer: PCT/EP2002/014546
(87) Internationale Veröffentlichungsnummer: WO 2003/055823

(56) Entgegenhaltungen:
- DE-A- 2 311 467
- US-A- 2 090 693
- US-A- 3 366 724
- US-A- 4 666 736

## Beschreibung

Die Erfindung betrifft ein Verfahren zur kontinuierlichen Graphitierung insbesondere von Kathodenblöcken für die elektrolytische Herstellung von Aluminium.

Bei der elektrolytischen Herstellung von Aluminium nach dem Hall-Héroult-Verfahren werden Elektrolysezellen eingesetzt, die einen aus einer Vielzahl von Blöcken zusammengesetzten Boden umfassen, der als Kathode wirkt. Der Elektrolyt ist eine Schmelze, im wesentlichen eine Lösung von Aluminiumoxid in Kryolith. Die Arbeitstemperatur liegt beispielsweise bei ca. 1000 °C. Das elektrolytisch abgeschiedene geschmolzene Aluminium sammelt sich auf dem Boden der Zelle unter einer Schicht des Elektrolyten. Um die Zellen ist ein metallisches Gehäuse (bevorzugt Stahl) mit einer Auskleidung aus hochtemperaturbeständigem Material.

Das Material der Kathodenblöcke ist wegen der erforderlichen chemischen und thermischen Beständigkeit bevorzugt Kohlenstoff, der durch thermische Behandlung teilweise oder vollständig graphitiert sein kann. Zur Herstellung solcher Kathodenblöcke werden Mischungen von Pechen, Koksen, Anthrazit und/oder Graphit in ausgewählten Teilchengrößen bzw. Teilchengrößenverteilungen für die Feststoffe gemischt, geformt und gebrannt und gegebenenfalls (teilweise) graphitiert. Das Brennen (Carbonisierung) erfolgt üblicherweise bei Temperaturen von ca. 1200 °C, die Graphitierung üblicherweise bei Temperaturen von über ca. 2400 °C.

Aus dem US-Patent 2,090,693 ist ein Verfahren bekannt, bei dem das Ausmaß der Graphitierung durch den in dem bereits wärmebehandelten Teil eines zu graphitierenden Körpers durch einen Induktionsstrom gemessen wird, der sich entsprechend der Leitfähigkeit und damit dem Ausmaß der Graphitierung des Körpers ändert. Abweichungen von dem eingestellten Graphitierungsgrad werden durch entsprechende Änderung des Stroms für die induktive Beheizung ausgeglichen. Aus der deutschen Offenlegungsschrift 2 311 467 ist ein Verfahren zur kontinuierlichen Graphitierung von Kunstkohlekörpern bekannt, das zu einem homogenen Graphitierungsgrad führt.

Während graphitierte Kathoden wegen ihrer höheren elektrischen Leitfähigkeit bevorzugt werden, zeigen sie eine stärkere Abnutzung während des Betriebs, entsprechend einer mittleren jährlichen Abnahme ihrer Dicke von bis zu 80 mm. Diese Abnutzung ist nicht gleichmäßig über die Länge der Kathodenblöcke (entsprechend der Breite der Zelle) verteilt, sondern verändert die Oberfläche der Kathodenblöcke zu einem W-förmigen Profil. Durch den ungleichmäßigen Abtrag wird die Nutzungsdauer der Kathodenblöcke begrenzt durch die Stellen mit dem größten Abtrag.

Eine Möglichkeit, den Abtrag über die Länge des Kathodenblocks zu vergleichmäßigen und damit die Nutzungsdauer zu verlängern, besteht darin, die Kathodenblöcke so auszuführen, daß ihr elektrischer Widerstand über die Länge variiert, derart daß die Stromdichte (und damit die Abnutzung) über ihre Länge gleichmäßig ist oder zumindest eine möglichst geringe Abweichung über die Länge von ihrem Mittelwert aufweist.

Eine Lösung ist in DE 20 61 263 beschrieben, wobei zusammengesetzte Kathoden gebildet werden entweder aus mehreren Kohlenstoffblöcken mit unterschiedlicher elektrischer Leitfähigkeit, die so angeordnet werden, daß sich eine gleichmäßige oder annähernd gleichmäßige Stromverteilung ergibt, oder aus Kohlenstoffblöcken, deren elektrische Widerstände in Richtung der kathodischen Ableitungen kontinuierlich zunehmen. Die Anzahl der Kohlenstoffblöcke und deren elektrischer Widerstand richten sich jeweils nach Zellengröße und Zellentyp, sie müssen für jeden Fall neu errechnet werden. Kathodenblöcke aus einer Vielzahl von einzelnen Kohlenstoff-Blöcken erfordern einen hohen Aufwand bei der Konstruktion; auch müssen die Stoßstellen jeweils gut abgedichtet werden, um ein Ausfließen des flüssigen Aluminiums an den Stoßstellen zu vermeiden.

In der WO 00/46426 ist eine Graphitkathode beschrieben worden, die aus einem einzelnen Block besteht, der eine über seine Länge veränderliche elektrische Leitfähigkeit aufweist, wobei die Leitfähigkeit an den Enden des Blocks niedriger ist als in der Mitte. Diese ungleichmäßige Verteilung der elektrischen Leitfähigkeit wird erreicht, indem während der Graphitierung die Endzonen auf eine Temperatur von 2200 bis 2500 °C gebracht werden, während die mittlere Zone einer Temperatur von 2700 bis 3000 °C ausgesetzt wird. Diese unterschiedliche Wärmebehandlung kann gemäß dieser Lehre durch zwei Weisen erreicht werden: einmal kann die Wärmeableitung im Graphitierungsofen unterschiedlich begrenzt werden, oder es können Wärmesenken in der Nachbarschaft der Endzonen eingebracht werden, die den Wärmeverlust erhöhen. Bei einer Quergraphitierung wird dabei die Dichte der wärmeisolierenden Schüttung so verändert, daß der Wärmeverlust über die Länge der Kathoden ungleichmäßig wird und damit die gewünschten Temperaturen eingestellt werden. Auch bei der Längsgraphitierung kann durch unterschiedliche Ausführung der wärmeisolierenden Schüttung der Wärmeverlust in der Nähe der Enden vergrößert werden, oder es werden zu diesem Zweck wärmeableitende Körper bevorzugt aus Graphit in deren Nähe eingebracht, die einen stärkeren Wärmeabfluß nach außen zur Ofenwand hin bewirken.

Gemäß einer anderen Methode kann der Unterschied der Wärmebehandlung durch lokale Veränderung der Stromdichte erfolgen, mit-der Folge unterschiedlicher Wärmeentwicklung.

Diese Veränderung der Stromdichte kann gemäß der Lehre durch unterschiedliche Widerstände der leitenden Schüttung zwischen zwei Kathoden in einem Acheson-Ofen (Quergraphitierung) erfolgen, für ein Längsgraphitierungsverfahren ist kein derartige Lösung angegeben.

Diese bekannten Methoden weisen für die Praxis erhebliche Nachteile auf. Ein Unterschied von 500 °C für die gewünschten Graphitierungstemperaturen in der Mitte und an den Enden der Kathoden ist durch Wärmesenken allein nicht erreichbar. Unterschiedliche Wärmeableitung nach außen in dem erforderlichen Maße bringt einen erheblichen Energieverlust, der die Fertigung wesentlich verteuert. Der höhere Wärmeverlust nach der Seite des Ofens bedeutet auch eine höhere thermische Beanspruchung, die die Konstruktion des Ofens verteuert oder seine Lebensdauer vermindert. Schließlich ist eine Inhomogenität der wärmeisolierenden bzw. der leitenden Schüttung wenig praktikabel, da das Schüttungsmaterial zur Befüllung in mehreren Schritten eingebracht werden müßte und nach dem Abschluß des Ofenzyklus und dem Entfernen der Kathoden wieder entsprechend seiner Wärmeleitung bzw. elektrischen Leitfähigkeit klassiert werden müßte.

Es ist daher die Aufgabe der vorliegenden Erfindung, ein praktikables Verfahren zur Verfügung zu stellen, um Kathoden herzustellen, die über ihre Länge eine unterschiedliche elektrische Leitfähigkeit aufweisen.
Die Aufgabe wird gelöst durch ein kontinuierliches Graphitierungsverfahren, ausgehend insbesondere von carbonisierten Elektrodenblöcken, umfassend einen tunnelförmigen Ofen mit einer Fördereinrichtung, Wärmeschleusen am Ein- und Ausgang des Ofens sowie mindestens eine Heizstrecke im Inneren des Ofens, deren Länge geringer als die Länge der Elektrodenblöcke ist, und deren Heizleistung folgend der Bewegung der Elektrodenblöcke verändert wird derart daß die graphitierten Körper über ihre Länge eine unterschiedliche elektrische Leitfähigkeit aufweisen.

Dabei wird durch eine konduktive Heizung eine Grunderwärmung der zu graphitierenden Körper sichergestellt. Die Stromzuführung kann dabei zu den einzelnen Blöcken erfolgen, wobei dann die Zuführungen vorteilhafterweise nicht direkt an den Enden der Blöcke liegen, sondern beispielsweise über Manschetten in den Randzonen realisiert werden. Die Entfernung von den Enden der Körper kann dabei bis zu 10 % von deren Länge betragen. Es ist jedoch auch möglich, die Stromzuführung über die Enden bzw. die Endflächen der Körper vorzunehmen. Die durch konduktive Heizung eingeleitete Energie ist vorteilhafterweise so zu bemessen, daß die Körper allein durch diese auf Temperaturen bis zu maximal 2650 °C, bevorzugt bis zu 2500 °C, und insbesondere bis zu 2200 °C erwärmt werden.

Es ist im Rahmen der Erfindung auch möglich, die Stromzuführung für die konduktive Heizung so anzuordnen, daß mehr als ein Körper durch diesen Strom konduktiv erwärmt wird. Im Ergebnis entspricht diese Ausführungsform derjenigen, wobei die Stromzuführung bei einem einzelnen Körper über dessen Endflächen realisiert wird. Selbstverständlich gelten dabei dieselben Bedingungen für die zugeführte Energie, die im vorigen Absatz genannt sind.

Die zusätzlich benötigte Energie, um auf die für die Graphitierung erforderlichen Temperaturen zu gelangen, kann durch induktive Heizung oder durch Strahlungsheizung aufgebracht werden. Die Heizelemente hierfür haben bevorzugt eine Länge, die kleiner ist als die der zu graphitierenden Körper. Unter der Länge eines Heizelementes wird hier die Strecke in Richtung der Länge der zu graphitierenden Körper verstanden, die mit einer über diese Strecke im wesentlichen konstanten Energieabgabe betrieben wird, insbesondere ist nicht die Baulänge des Heizelements gemeint Beispielsweise können für die zusätzliche Erwärmung Anordnungen von induktiven Heizelementen verwendet werden, bei denen die wirksame Länge der EinzelElemente höchstens 50 % der Länge der zu graphitierenden Körper beträgt. Bevorzugt ist die wirksame Länge bis zu 30 % von der Länge der Körper, insbesondere bis zu 20 %. Anstelle der induktiven Heizelemente oder in Kombination mit diesen können auch Strahlungsheizelemente eingesetzt werden, für deren Geometrie dieselben Bedingungen wie für die induktiven Heizelemente gelten.

Die Einschaltdauer und der Zeitpunkt des Ein- und Ausschaltens der Zusatzheizung(en) wird erfindungsgemäß so gewählt, daß die (der Länge der Körper nach) mittleren Zonen einer höheren Energiezufuhr ausgesetzt sind und daher auf höhere Temperaturen kommen, vorzugsweise auf Temperaturen von mindestens 2650 °C, bevorzugt mindestens 2700 °C, insbesondere auf einen Temperaturbereich zwischen 2700 und 3000 °C. Es ist erfindungsgemäß auch möglich, die Zusatzheizungen nicht gänzlich auszuschalten, wenn die Endzonen oder die dem Ende nahen Zonen in den Wirkungsbereich der Zusatzheizungen gelangen, sondern diese lediglich mit einer geringeren Energieabgabe zu betreiben. Dabei sollte die abgegebene Energie um mindestens 10 % verringert werden, wenn die Endzonen in den Wirkungsbereich der Zusatzheizungen gelangen.

Umfaßt der Ofen mehrere Heizstrecken, so ist es bevorzugt, deren Leistung zeitlich so zu verändern, daß jeweils die Heizstrecke, in der die Mitte eines der zu graphitierenden Körper ist, mit ihrer Nennleistung betrieben wird, wogegen die Heizstrecken, in der sich ein Ende oder ein dem Ende des eines der zu graphitierenden Körper nahes Segment sich befinden, mit einer um mindestens 5 % geringeren Leistung betrieben werden.

## Patentansprüche

1. Verfahren zur kontinuierlichen Graphitierung, umfassend einen tunnelförmigen Ofen mit einer Fördereinrichtung, Wärmeschleusen am Ein- und Ausgang des Ofens sowie mindestens eine Heizstrecke im Inneren des Ofens, deren Länge geringer als die Länge der zu graphitierenden Körper ist, und deren Heizleistung folgend der Bewegung der Körper verändert wird, derart daß die graphitierten Körper über ihre Länge eine unterschiedliche elektrische Leitfähigkeit aufweisen, wobei die Heizstrecke eine konduktive Heizung umfaßt, deren Zuführungsabstände kleiner als die Länge eines der zu graphitierenden Körper sind.

2. Verfahren nach Anspruch 1, **dadurch gekennzeichnet, daß** die Heizstrecke zusätzlich eine induktive Heizung umfaßt.

3. Verfahren nach Anspruch 1, **dadurch gekennzeichnet, daß** die Heizstrecke zusätzlich eine Strahlungsheizung umfaßt.

4. Verfahren nach Anspruch 1, **dadurch gekennzeichnet, daß** die Leistung der Heizstrecke um mindestens 10 % verringert wird, wenn die Enden eines der zu graphitierenden Körper die Heizstrecke durchlaufen.

5. Verfahren nach einem oder mehreren der vorhergehenden Ansprüche, **dadurch gekennzeichnet, daß** der Ofen mehrere Heizstrecken umfaßt, deren Leistung zeitlich so verändert wird, daß jeweils die Heizstrecke, in der die Mitte eines der zu graphitierenden Körper ist, mit ihrer Nennleistung betrieben wird, wogegen die Heizstrecken, in der sich ein Ende oder ein dem Ende eines der zu graphitierenden Körper nahes Segment sich befinden, mit einer um mindestens 5 % geringeren Leistung betrieben werden.

6. Verfahren nach einem oder mehreren der vorhergehenden Ansprüche, **dadurch gekennzeichnet, daß** die zu graphitierenden Körper carbonisierte Kathodenblöcke für die elektrolytische Reduktion von Aluminiumoxid sind.

## Claims

1. A method for continuous graphitisation, comprising a tunnel-shaped furnace having a conveying means, heat locks at the inlet and outlet of the furnace and at least one heating section inside the furnace, whose length is less than the length of the bodies to be graphitised and whose heating power varies in accordance with the movement of the bodies, in such a way that the graphitised bodies exhibit different electrical conductivity over their length, wherein the heating section comprises a conductive heating system, whose supply intervals are smaller than the length of one of the bodies to be graphitised.

2. A method according to claim 1, **characterised in that** the heating section additionally comprises an inductive heating system.

3. A method according to claim 1, **characterised in that** the heating section additionally comprises a radiant heating system.

4. A method according to claim 1, **characterised in that** the power of the heating section is reduced by at least 10 % when the ends of one of the bodies to be graphitised pass through the heating section.

5. A method according to one or more of the preceding claims, **characterised in that** the furnace comprises a plurality of heating sections, whose power varies over time in such a way that in each case the heating section in which is located the middle of one of the bodies to be graphitised is operated at its nominal power, whereas the heating sections in which is located an end or a segment in the vicinity of the end of one of the bodies to be graphitised are operated at a power at least 5 % lower.

6. A method according to one or more of the preceding claims, **characterised in that** the bodies to be graphitised are carbonised cathode blocks for electrolytic reduction of aluminium oxide.

## Revendications

1. Procédé de graphitisation continue, comprenant un four en forme de tunnel équipé d'un dispositif de transport, de sas de chaleur à l'entrée et la sortie du four ainsi que d'au moins un trajet de chauffe à l'intérieur du four, dont la longueur est plus petite que la longueur des corps à graphiter et dont on fait varier la puissance de chauffe en suivant le mouvement des corps de telle manière que les corps graphités présentent une conductibilité électrique variant sur leur longueur, le trajet de chauffe comprenant un chauffage par conductivité dans lequel les écartements des alimentations sont plus petits que la longueur d'un des corps à graphiter.

2. Procédé selon la revendication 1,
**caractérisé en ce que**
le trajet de chauffe comprend en outre un chauffage par induction.

3. Procédé selon la revendication 1,
**caractérisé en ce que**
le trajet de chauffe comprend en outre un chauffage par rayonnement.

4. Procédé selon la revendication 1,
**caractérisé en ce qu'**
on réduit la puissance du trajet de chauffe d'au moins 10 % au moment où les extrémités d'un corps à graphiter passent dans le trajet de chauffe.

5. Procédé selon une ou plusieurs des revendications précédentes,
**caractérisé en ce que**
le four comprend plusieurs trajets de chauffe dont on fait varier la puissance dans le temps de telle manière que le trajet de chauffe travaille à sa puissance nominale, quand s'y trouve le milieu d'un des corps à graphiter tandis que les trajets de chauffe dans lesquels se trouve une extrémité, ou un segment proche de l'extrémité, d'un des corps à graphiter travaillent avec une puissance réduite d'au moins 5 %.

6. Procédé selon une ou plusieurs des revendications précédentes,
**caractérisé en ce que**
les corps à graphiter sont des blocs cathodiques carbonisés destinés à la réduction électrolytique de l'oxyde d'aluminium.
